# EUROPEAN PATENT APPLICATION

(11) **EP 2 645 698 A1**
(43) Date of publication of application: **02.10.2013**
(21) Application number: 11843800.1
(22) Date of filing: 24.11.2011
(51) Int. Cl.: H04N 1/58

(54) **TRAPPING METHOD AND APPARATUS**

(30) Priority: 25.11.2010 CN 201010565484
(71) Applicant: Peking University Founder Group Co., Ltd, Haidian District Beijing 100871 (CN); Beijing Founder Electronics Co., Ltd., Haidian District, Beijing 100085 (CN)
(72) Inventor: TANG, Yu, Beijing 100085 (CN); LIN, Hao, Beijing 100085 (CN); HUANG, Genglin, Beijing 100085 (CN)
(74) Representative: Haley, Stephen
(86) International application number: PCT/CN2011/082867
(87) International publication number: WO 2012/069003

(57) **Abstract**

The application provides a method for trapping. The method comprises: vectorizing a bitmap in a PDF file to retrieve a description regarding paths of the bitmap; intersecting the retrieved paths with other primitives in the PDF file; and trapping results of intersection. The application further provides a device for trapping. The device comprises: a vectorizing module configured to vectorize a bitmap in a PDF file to retrieve description regarding paths of the bitmap; an intersecting module configured to intersect the paths with other primitives in the PDF file; and a trapping module configured to trap results of intersection. The present application ensures the accuracy of bitmap trapping.

## Description

### TECHNICAL FIELD

The present application relates to a field of printing, more particularly to a method and a device for trapping.

### BACKGROUND

Trapping technology, also referred to as colortrapping, refers to expanding or contracting colors so that two colors have a minor overlap to compensate differences during Overprint.

Bitmap trapping is a special kind of trapping process. Bitmap in a PDF (Portable Document Format) file, also referred to as Mask, refers to a binary image lattice of which the pixel value is 0 or 1. Both of the bit depth and color channel number of bitmap are 1. Bitmap functions as a mask, and the value of each of its points determines whether to show up the page contents below the bitmap. Among the types of primitive objects of PDF (Portable Document Format) files, only the image objects could contain bitmap lattice. The image objects are divided into three categories: Image Mask, Type3 and Type4 image objects. Image Mask only contains one bitmap lattice, and the part covering the page is filled with a color space of the current graphics state. Type3 image contains one image lattice and one Bitmap lattice, wherein bitmap effects above the image lattice and the part covering the page is filled with image contents. Type4 image only contains one image matrix, wherein bitmap lattice is generated by the Decode parameter in the dictionary to images during the analysis of image objects. This parameter specifies a range of colors, and if an image point of the image lattice has a color value in this range, its corresponding point in the bitmap should be 0 or 1.

During the trapping process, bitmap is trapped as image. Due to the spatial resolution of the image, the trapping widths in X/Y directions of the page space coordinate are not consistent. Moreover, when trapping is generated between a bitmap and another image object, the precision will be reduced due to space transformation, so that the generated trapping effect is inconsistent with the original contents of the bitmap. This would cause problems of dislocation, less or more trapping and the trapping effect is not ideal.

In summary, the inventors have found that the existing proceeding method of generating trapping effect for bitmaps cannot ensure the accuracy of trapping results and thus have certain disadvantages.

### SUMMARY OF THE APPLICATION

The object of the application is to provide a method and a device for trapping bitmaps accurately.

In an embodiment of the present application, it provides a method for trapping, comprising a step of vectorizing a bitmap in a PDF file to acquire a description regarding paths; and a step of intersecting the acquired paths with other primitives in the PDF file; and trapping results of intersection.

In another embodiment of the present application, it further provides a device for trapping, comprising: a vectorizing module for vectorizing bitmaps in a PDF file to acquire description regarding paths; an intersecting module for intersecting the paths with other primitives in the PDF file; and a trapping module for trapping results of intersection.

In the method and device for trapping according to the above embodiments, a bitmap is firstly vectorized and then trapped, so that the problems of dislocation, less or more trapping in prior art may be solved and errors introduced due to space transformation may be avoided. Therefore, the generated trapping effect can be accurately consistent with the original image in position and contents, and the consistency of trapping widths under different resolutions can be maintained, so that the effect of bitmap trapping can be greatly improved.

### BRIEF DESCRIPTION OF THE DRAWINGS

The accompanying drawings, as a part of the application disclosed herein, are used to provide a further explanation of the present application. The exemplary embodiments of the present application and its description are used to explain the application rather than to limit the application. In the accompanying drawings:

Fig. 1 shows a flow chart of a method for trapping according to an embodiment of the present application.

Fig. 2 shows a schematic diagram of vectorization description of bitmap according to a preferable embodiment of the present application.

Fig. 3 shows a flow chart of extracting outer and inner boundaries of bitmap according to a preferable embodiment of the present application.

Fig. 4 shows a situation where boundary tracking needs starting points for twice according to a preferable embodiment of the present application.

Fig. 5 shows a schematic diagram of extracting pixel boundaries according to a preferable embodiment of the present application.

Fig. 6 shows a schematic diagram of extracting pixel boundaries when the current and next points of the current boundary pixel are the same point according to a preferable embodiment of the present application.

Fig. 7 shows a schematic diagram of a device for trapping according to an embodiment of the present application.

Fig. 8 is a schematic diagram showing the comparison between the trapping effects of bitmaps generated according to prior art and the embodiments of the application.

### DETAILED DESCRIPTION OF THE APPLICATION

Hereinafter, the present application will be explained in detail with reference to the accompanying drawings in connection with the embodiments. It should be noted that, the present application relates to the field of graphics and image processing, and thus it is inevitably required to use gray images to illustrate the process of image processing. However, because of publishing and printing, the original gray images only appear as black and white images. This disclosure will try to describe the gray situations in text.

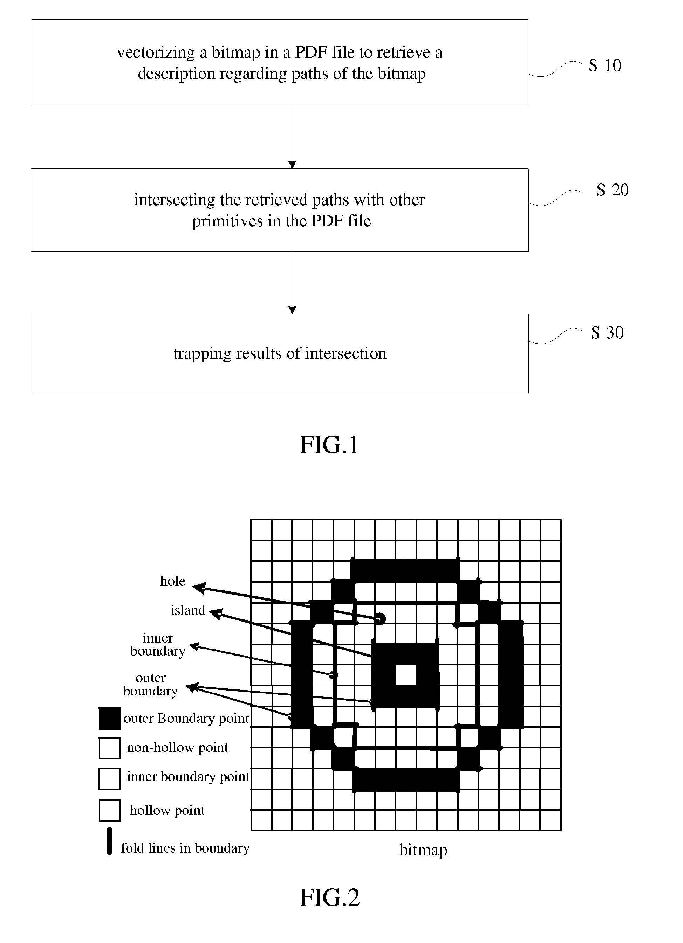

Fig. 1 shows a flow chart of a trapping method according to an embodiment of the present application. The method comprises the following steps.

In Step S10, a bitmap in a PDF file is vectorized to acquire description regarding paths of the bitmaps. In Step S20, the acquired paths are intersected with other primitives in the PDF file. And in Step S30, the results of intersection are trapped.

In the prior art, bitmap is directly trapped as image. Due to the spatial resolution of the image, the trapping effect is inconsistent with the original contents of the bitmap. It would cause problems of dislocation, less or more trapping. In this embodiment, bitmaps are vectorized to obtain paths and relevant trapping processes are performed for the paths. Since the paths are of vectorized description, they are irrelevant to the spatial resolution of the image, the problem in the prior art that the trapping effect is inconsistent with the original contents of the bitmap may be overcome in this embodiment. During the generation of trapping, the precision of the page coordinates of object can be always maintained so that the accuracy of the trapping effect is ensured.

Fig. 2 shows a schematic diagram of vectorization description of bitmap according to a preferable embodiment of the present application. As shown in Fig. 2, bitmap is a binary lattice. In this preferable embodiment, it is assumed that when the value is 0, pixel is hollow, and when the value is 1, pixel is non-hollow. Similarly, it is also applicable to the application that when the value is 1, pixel is hollow, and when the value is 0, pixel is non-hollow. The outer sides of the outer boundary pixels of the non-hollow area, as shown in bold lines, form the outer boundary. The hollow area surrounded by non-hollow areas is referred to as "hole". The outer sides of the outer boundary pixels of the hole, as shown in bold lines, form the inner boundary. If a non-hollow area exists in the "hole", it is referred to as "island". "Island" and "hole" can be nested into each other and recur. The above outer boundary and inner boundary together form the path of bitmap. Hereinafter, the outer boundary pixels of the non-hollow area can be referred to as external boundary pixels, and the outer boundary pixels of the hollow area can be referred to as internal boundary pixels.

Preferably, step S10 further comprises a step of detecting outer boundary pixels of each non-hollow area of the bitmap; a step of determining contour of polygon formed by the outer boundary pixels of each non-hollow area; a step of describing the contour of each non-hollow area as one outer boundary of the paths, respectively; and a step of marking the non-hollow region of which the outer boundary has been determined as being searched.

Preferably, the step of detecting outer boundary pixels of each non-hollow area of the bitmap comprises: searching non-hollow pixel which has not been searched line by line in the current non-hollow area; determining currently searched non-hollow pixel which has not been searched as the starting point of outer boundary pixels of the current non-hollow area, and tracking the outer boundary pixels. When the tracked current pixel is determined to be non-hollow and at least one hollow pixel exists in its four neighborhoods, it is determined that the current pixel is outer boundary pixel of the non-hollow area.

Preferably, step S10 comprises: detecting outer boundary pixels of each hollow area of the bitmap; determining contour of polygon formed by the outer boundary pixels of each hollow area; describing the contour of each hollow area as one inner boundary of the paths, respectively; marking the hollow region of which the inner boundary has been determined as searched.

Preferably, the step of detecting outer boundary pixels of each hollow area of the bitmap may comprise: searching hollow pixel which has not been searched line by line in current hollow area; determining currently searched hollow pixel which has not been searched as starting point of outer boundary pixels of the current hollow area, and tracking outer boundary pixel. When the tracked current pixel is determined as hollow and at least one non-hollow pixel exists in its four neighborhoods, it is determined the current pixel is outer boundary pixel of hollow area.

Bitmap is a binary image lattice of which the pixel value is 0 or 1. For example, when the value is 1, pixel is non-hollow, and when the value is 0, pixel is hollow. Thus, a bitmap contains non-hollow area and hollow area. In the above preferable embodiment, by dividing the image of bitmap into non-hollow area and hollow area, and tracking and describing the contours of non-hollow area and hollow area, the description of bitmap paths is obtained. The description of paths embodies the vectorization of bitmap so that the accuracy of the page coordinates of bitmap can be maintained during the trapping and may not be affected by the spatial resolution.

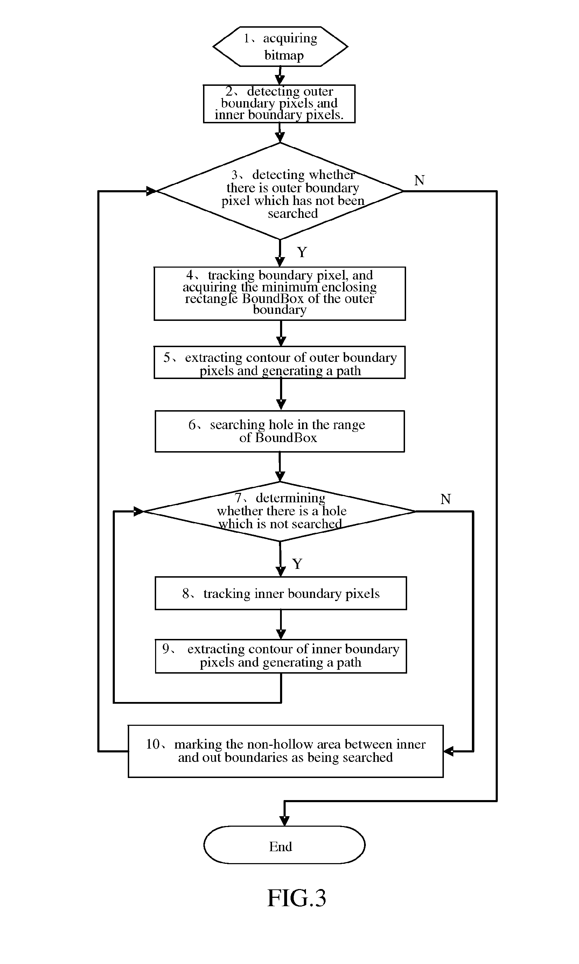

Fig. 3 shows a flow chart of extracting outer and inner boundaries of bitmap according to a preferable embodiment of the present application. The flow chart includes the technical solutions of the above plurality of preferable embodiments and comprises the following steps.

In Step 1, bitmaps are retrieved from a PDF file.

In Step 2, outer boundary pixels and inner boundary pixels are detected. The detection of boundary pixels is performed by the detection method of four neighborhoods so as to ensure that there is only position relationship of strong connection among the boundary pixels. When the current pixel value is 1 (non-hollow) and at least one pixel of which the value is 0 (hollow) exists around its four neighborhoods, this pixel is marked as outer boundary pixel. When the current pixel value is 0 (hollow) and at least one pixel of which the value is 1 (non-hollow) exists in its four neighborhoods, this pixel is marked as inner boundary pixel.

In Step 3, in the range of image, it is detected whether there is outer boundary pixel which has not been searched line by line. Once it is found, it indicates that there is non-hollow area of which the inner and out boundaries are not extracted; otherwise, the search is completed and all the boundaries of the bitmap have been extracted, it ends.

In Step 4, it takes the current outer boundary pixel as starting point, and then tracks boundary pixel. During the tracking, the enclosing rectangle BoundBox of the set of outer boundary pixels is acquired.

In Step 5, pixel contour of outer boundary pixels is expanded and a path of bitmap is generated.

In Step 6, it searches hole in the range surround by BoundBox.

In Step 7, if no hole is searched, the method goes to step 10; otherwise, it continues.

In Step 8, it takes the inner boundary pixel of the searched hole as a starting point, and then tracks the inner boundary pixel.

In Step 9, it expands pixel contour of inner boundary pixels and generates a path, and then goes to step 7.

In Step 10, it marks the non-hollow area between inner and out boundaries as being searched and then goes to step 3. It should be noted that if the area which is searched for this time contains an island, the island will not be marked. During the next search of outer boundary pixels, the island will be treated as a new non-hollow area for extraction of inner and out boundaries.

Preferably, the step of tracking outer boundary pixels may comprises the following steps.

In Step A), from the starting point, it initially searches the pixel in left-down direction.

In Step B), it determines whether the pixel in current searching direction is outer boundary pixel. If not, it rotates the searching direction for 45 degrees in counterclockwise for each time and determines whether the pixel in current searching direction is outer boundary pixel, until the pixel in current searching direction is outer boundary pixel.

In Step C), if it is outer boundary pixel, it determines whether the currently found outer boundary pixel is the starting point for the second time. If so, the tracking stops. Otherwise, it rotates 90 degrees from the current searching direction in clockwise, and then goes back to step B.

The preferable embodiment may be implemented by a list that acquires boundary pixels based on a tracking algorithm of direction anticipation. Outer boundary pixels may be firstly tracked and in the area surround by the outer boundary pixels, it searches whether there is a "hole". If yes, inner boundary pixels will be tracked.

Obviously, the above description merely provides the preferable embodiments of application for vectorizing bitmaps, and the present application is not limited thereto. Other methods for vectorizing bitmaps may be also proposed under the spirit of the application.

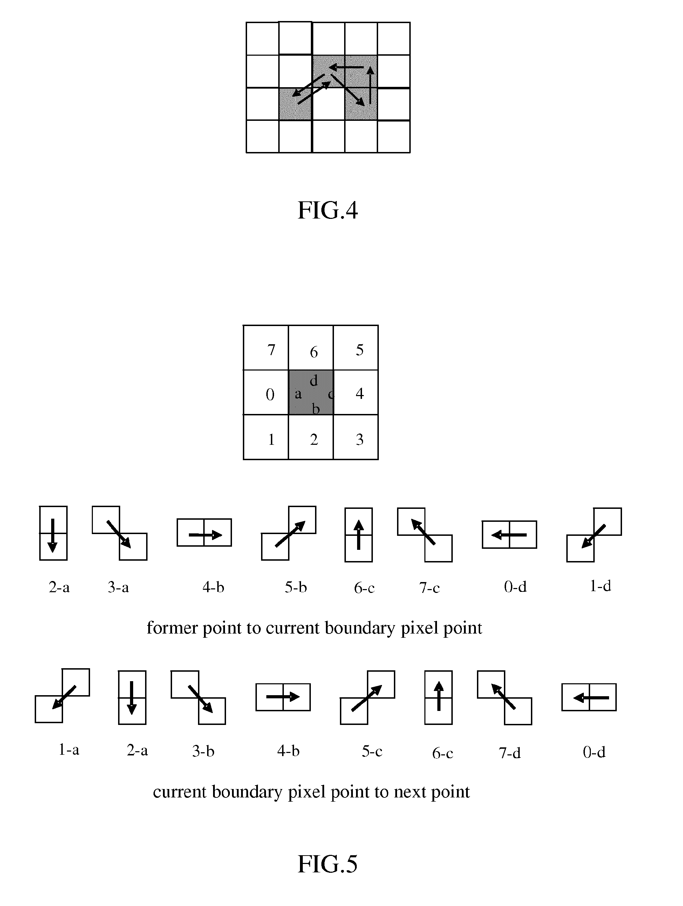

Fig. 4 shows a schematic diagram of tracking outer boundary pixels according to a preferable embodiment of the present application. The tracking of inner and outer boundary pixels uses a tracking algorithm of eight neighborhoods. It firstly finds the most left-upper boundary pixel of the area and takes it as the starting point. Due to the continuity of the boundaries, each boundary pixel may be represented with an angle of the vectors between the current boundary pixel and the former boundary pixel. In the process of tracking, it starts from the starting point and sets the initial searching direction to be left-down. If the left-down point is boundary pixel, it will be recorded; otherwise, it rotates the searching direction by 45 degrees in counterclockwise, until the boundary pixel is found. Then, it takes the found boundary pixel as a new starting point, and then rotates 90 degrees from the current searching direction in clockwise. And then it utilizes the same method to search the next boundary pixel until the searching returns to the original point. However, the tracking of area boundaries has not been completed. As shown in Fig. 4, the starting point is (3, 2), in accordance with the tracking rule, the order of searching will be (3, 2) → (2, 3) → (3, 2), if tracking stops at this time, it is obviously wrong. Therefore, it should determine whether the starting point would be experienced for twice, in order to avoid incompletion of tracking boundary pixel.

The preferable embodiment achieves the tracking of outer boundary pixels so that the inner and outer boundaries may be determined. Obviously, the above description merely provides a preferable embodiment of the application for tracking outer boundary pixels, and the present application is not limited thereto. Other methods for tracking outer boundary pixels may be also proposed under the spirit of the application.

Preferably, determining contour of polygon formed by the outer boundary pixels of each hollow area and each non-hollow area respectively comprises a step of creating a list of outer boundary pixels according to the order of tracking the boundary pixels. This determining may further comprise a step of extracting each pixel in the list one by one and marking its right side in the searching direction as contour. Specifically, for the first time, it marks the right side of the current pixel in the searching direction from the former pixel to the current pixel, and for the second time, it marks the right side of the current pixel in the searching direction from the current pixel to the former pixel, wherein the right sides taken for both times may be the same side, and if the former and next pixels of the current pixel are the same pixel, the contour of the current pixel is compensated in counterclockwise.

An ideal boundary path is a vector description of which the pixel width is 0. The path is formed by fold lines, and each fold line corresponds to a pixel side where a pixel coincides with the boundary of bitmap. The length of the line is the width of one pixel. The preferable embodiment achieves the description of the inner and outer boundaries.

Here, the contour of pixels may be extracted according to the position relationship of front and back among each node. Since all of the boundary pixels are tracked in counter-clockwise order, only the side of the right pixel in the tracking direction needs to be considered. According to the position relationship between each boundary pixel and each adjacent boundary pixel in the front and back, it may be divided into 16 categories, as shown in Fig. 5. In Fig. 5, numerals 0-7 represent the forwarding direction of a boundary in the list, and letters A-B represent four pixel boundaries corresponding to a boundary pixel. For example, when a current boundary pixel is just below the former boundary pixel, the forwarding direction of boundary is 2, and the pixel side to be extracted from the current boundary pixel is *a.* In consideration of optimization, for continuously pixel boundaries taken at the same side, they may be combined so as to save the number of the generated path points. In addition, after the expansion of pixel contours at inner boundaries is completed, the contours need to be ordered reversely to ensure that the path directions of the inner and outer boundaries are opposite.

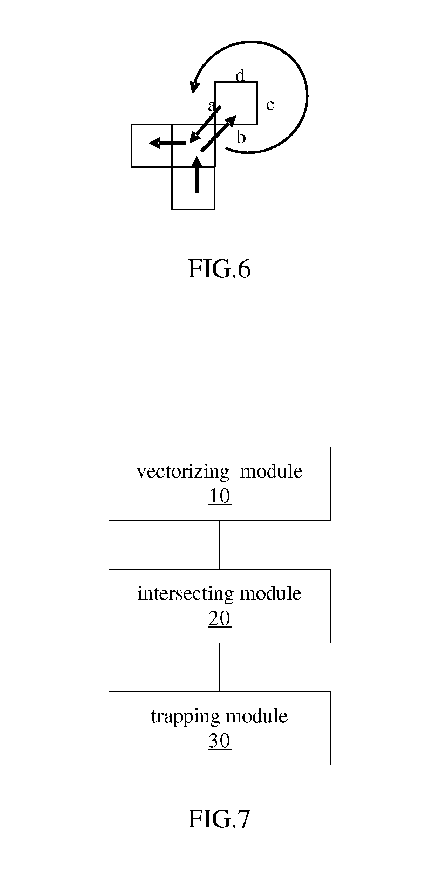

In addition, there is a special situation where the former and next points of the current boundary pixel are the same point. Then, it only needs to compensate the boundary of the current pixel in counterclockwise, as shown in Fig. 6.

Preferably, in the step 20 of intersecting the paths with other primitives in the PDF file, for an Image Mask type of bitmap, it performs the trapping in the same way as the trapping for graphics, and for Type3 and Type4 types of bitmaps, it performs the trapping in the same way as the trapping for the tailored general images. Path intersecting and trapping of image paths may use the conventional methods, in which a bitmap is processed as an image. In the preferable embodiment, since the bitmap is vectorized, the bitmap may be trapped according to graphics.

Fig. 7 shows a schematic diagram of a device for trapping according to an embodiment of the present application. The device may comprise a vectorizing module 10, an intersecting module 20 and a trapping module 30. The vectorizing module 10 is configured to vectorize bitmaps in a PDF file to acquire description regarding paths of the bitmaps. The intersecting module 20 is configured to intersect the paths with other primitives in the PDF file. The trapping module 30 is configured to trap results of intersection.

This device ensures the accuracy of trapping effect.

Preferably, the vectorizing module 10 comprises a first detecting module for detecting outer boundary pixels of each non-hollow area of the bitmap, and a first contour module for determining contour of polygon formed by the outer boundary pixels of each non-hollow area. The module 10 further comprises an outer boundary module for describing the contour of each non-hollow area as one outer boundary of the paths, respectively. In addition, the module 10 may further comprises a first marking module for marking the non-hollow region of which the outer boundary has been determined as searched; a second detecting module for detecting outer boundary pixels of each hollow area of the bitmap; a second contour module for determining contour of polygon formed by the outer boundary pixels of each hollow area; an inner boundary module for describing the contour of each hollow area as one inner boundary of the paths, respectively; and a second marking module for marking the hollow region of which the inner boundary has been determined as searched.

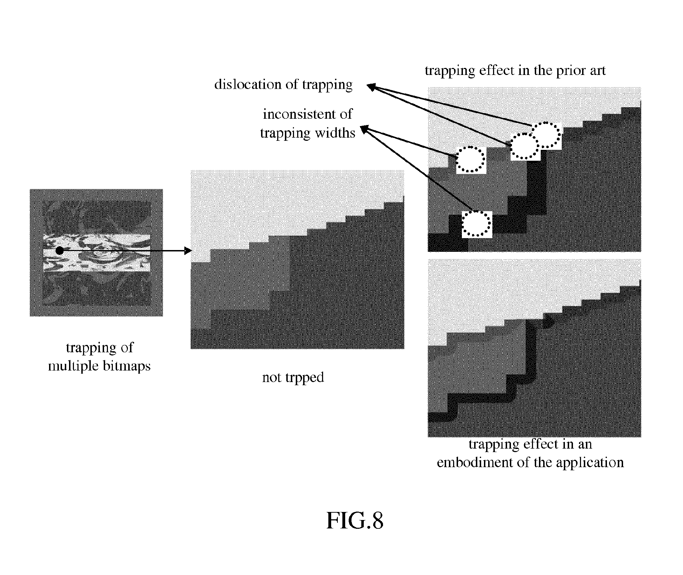

Fig. 8 is a schematic diagram showing the comparison between the trapping effects of bitmaps generated according to the prior art and the embodiments of the application. The sample is an overlap of two bitmaps and the trapping effect occurs on the boundaries of the bitmaps. Obviously, the preferable embodiment has a more accurate expression in the position and size of trapping area.

In view of the above description, it can be seen that compared with the traditional processing method of bitmap trapping, the application has advantages of improving the accuracy in bitmap trapping as below.

I. Generally, the boundaries of bitmap have very complex description and it is difficult to accurately calculate the direction and the length of the boundaries in a matrix method, so that the size of trapping area cannot be obtained directly. However, after vectorization, boundaries of bitmap can be quantitatively described and may not be interfered by the transform of image space to avoid introducing errors. Thus, during the generation of trapping, the precision of the page coordinates of object can be always maintained so that the accuracy of the trapping effect is ensured.

II. for the situation where a plurality of pages containing a bitmap overlap each other, it needs to determine the distribution where the boundaries between bitmaps are sheltered or hollow so as to determine where to be trapped or not. The disordered distribution of boundaries causes the complexity to obtain accurate trapping results in this situation to be greatly enhanced. However, after the process of vectorization, trapping of multiple bitmaps may be simply transformed into the trapping process of common primitives such as graphics and graphics, graphics and images. In this way, the processing complexity is greatly simplified and the trapping process is more reasonable.

Apparently, a person of ordinary skill in the relevant art will understand that each module or each step of the application mentioned above can be realized with a general computing device. The modules or steps can be integrated in a single computing device or distributed in a network composed of a plurality of computing devices. Optionally, the modules or steps can be realized by computing device executable program code such that they can be stored in a storage device to be executed by the computing device. Or, the modules or steps can be realized by making each of them to be implemented as an integrated circuit module respectively or making a plurality of the modules to be implemented as a single integrated circuit module. Thus, the present application is not limited to any particular hardware and software combination.

The preferable embodiments of the present application described herein are only as the preferable examples of the application rather than as limitation of the application. Various changes and modifications to the embodiments can be made by the skilled in the art. Thus, any change, equivalent replacement or improvement within the spirit and principle of the application will fall into the region of the scope of the application.

## Claims

1. A method for trapping, comprising:
vectorizing a bitmap in a PDF file to retrieve a description regarding paths of the bitmap;
intersecting the retrieved paths with other primitives in the PDF file; and
trapping results of intersection.

2. The method according to claim 1, wherein the vectorizing comprises:
detecting outer boundary pixels of each non-hollow area in the bitmap;
determining contour of polygon formed by the detected outer boundary pixels;
describing the determined contour for each non-hollow area as one outer boundary of the path, respectively; and
marking the non-hollow area of which the outer boundary has been determined as being searched.

3. The method according to claim 2, wherein the detecting comprises:
searching, line by line, non-hollow pixels which have not been searched in current non-hollow area; and
taking currently searched non-hollow pixel which has not been previously searched as a starting point of outer boundary pixels in the current non-hollow area, to track the outer boundary pixels;
wherein, when tracked current pixel is determined to be non-hollow and at least one hollow pixel exists in its four neighborhoods, it is determined that the current pixel is outer boundary pixel of the non-hollow area.

4. The method according to claim 1, wherein the vectorizing comprises:
detecting outer boundary pixels of each hollow area of the bitmap;
determining a contour of polygon formed by the detected outer boundary pixels;
describing the determined contour for each hollow area as one inner boundary of the paths, respectively; and
marking the hollow region of which the inner boundary has been determined as being searched.

5. The method according to claim 4, wherein detecting outer boundary pixels of each hollow area of the bitmap comprises:
searching, line by line, hollow pixels which have not been searched in current hollow area; and
taking currently searched hollow pixel which has not been previously searched as a starting point of outer boundary pixels in current hollow area, to track the outer boundary pixels;
wherein when the tracked current pixel is determined to be hollow and at least one non-hollow pixel exists in its four neighborhoods, it is determined that the current pixel is outer boundary pixel of the hollow area.

6. The method according to claim 3 or 5, wherein tracking the outer boundary pixels comprises:
A) from the starting point, initially searching the pixels in left-down direction;
B) determining whether a pixel in current searching direction is outer boundary pixel,
if not, rotating the searching direction by 45 degrees in counterclockwise for each time and determining whether pixels in current searching direction are outer boundary pixels, until pixels in current searching direction are outer boundary pixels; otherwise,
C) determining whether the currently found outer boundary pixel is determined as the starting point for the second time, if yes, ending the tracking; otherwise, rotating 90 degrees in clockwise from the current searching direction, and going back to step B).

7. The method according to claim 6, wherein determining contour of polygon formed by the outer boundary pixels of each hollow area and each non-hollow area respectively comprises:
creating a list of outer boundary pixels according to an order in which the boundary pixels are tracked; and
extracting each pixel in the list one by one and marking its right side in the searching direction as the contour, including:
for the first time, marking the right side of the current pixel in the searching direction from the former pixel to the current pixel, and
for the second time, marking the right side of the current pixel in the searching direction from the current pixel to the former pixel,
wherein the right sides marked for both times are allowed to be the same side, and if the former and next pixels of the current pixel are the same pixel, the extracting further comprises a step of compensating the contour of the current pixel in counterclockwise.

8. The method according to claim 1, wherein intersecting comprises:
for an Image Mask type of bitmap, performing the step of intersecting on in same way as the transformed graphics; and
for Type3 and Type4 types of bitmap, performing the step of intersecting in same way as tailored general images.

9. A device for trapping, comprising:
a vectorizing module configured to vectorize a bitmap in a PDF file to retrieve description regarding paths of the bitmap;
an intersecting module configured to intersect the paths with other primitives in the PDF file; and
a trapping module configured to trap results of intersection.

10. The device according to claim 9, wherein the vectorizing module comprises:
a first detecting module configured to detect outer boundary pixels of each non-hollow area of the bitmap;
a first contour module configured to determine contour of polygon formed by the outer boundary pixels in each non-hollow area;
an outer boundary module configured to describe the determined contour of each non-hollow area as one outer boundary of the paths, respectively;
a first marking module configured to mark the non-hollow region of which the outer boundary has been determined as being searched;
a second detecting module configured to detect outer boundary pixels of each hollow area of the bitmap;
a second contour module configured to determine contour of polygon formed by the outer boundary pixels of each hollow area;
an inner boundary module configured to describe the contour of each hollow area as one inner boundary of the paths, respectively; and
a second marking module configured to mark the hollow region, of which the inner boundary has been determined, as being searched.
